# EUROPEAN PATENT APPLICATION

(11) **EP 2 237 526 A1**
(43) Date of publication of application: **06.10.2010**
(21) Application number: 09156740.4
(22) Date of filing: 30.03.2009
(51) Int. Cl.: H04L 29/08, G06F 3/14

(54) **Method for optimizing the remote display transfer in thin client computing environment**

(71) Applicant: NEC Corporation, Minato-ku Tokyo 108-8001 (JP)
(72) Inventor: Fok, Frédéric, 92100 Boulogne Billancourt (FR); Alandzi, Valérie, 75015 Paris (FR)
(74) Representative: Ilgart, Jean-Christophe

(57) **Abstract**

The invention relates to a method for optimizing the refresh scheduling of graphics output data transmission adapted to thin client device (2) needs and capabilities in a client/server architecture wherein said thin client device is connected to a remote server (4), wherein the scheduling of said graphics output data transmission is evaluated and requested by the client.

Said method comprises the following steps:
At the thin client side:
- collecting information associated with at least one graphical area wherein said application graphics output data will be refreshed on a screen attached to said thin client device,
- evaluating dynamically transmission and processing resources of said thin client device,
- defining a dynamic list of criteria for refresh scheduling in function of the collected information and in function of said thin client device (2) transmission and processing resources,
- sending a screen refresh request comprising said dynamic list to said remote server, and

At the remote server (4) side:
- analyzing the received dynamic list,
- defining a refresh scheduling in function of at least one criterion of said list and in function of the processing resource of the remote server

## Description

### TECHNICAL DOMAIN

The invention pertains to telecommunication field and concerns a method for optimizing the refresh scheduling of graphics output data transmission adapted to thin client device needs and capabilities in a client/server architecture wherein said thin client device is connected to a remote server, and the scheduling of said graphics output data transmission is evaluated and requested by the thin client.

The invention also concerns a thin client device connected, in a client/server architecture, to a remote server comprising at least one application that generates data to be remotely displayed on a screen associated to said thin client device, wherein said screen being refreshed regularly for displaying said data.

The invention also concerns remote server connected, in a client/server architecture, to a thin client device, said remote server comprising at least an application that generates data to be remotely displayed on a screen associated to said device, said screen being refreshed regularly for displaying said data.

### STATE OF PRIOR ART

Thin client computing allows programs to be executed on one or more servers located on a server infrastructure within a network allowing data and programs to be accessed at any place where a network connection is available. The network can be a fixed network, a wireless (for instance a Universal Mobile Telecommunication System network, an Evolved Packet System network), or any other wireless network (for instance a WiFi or a WiMAX network).

Basically the thin client system is a client/server architecture where the thin client devices have lower processing powers than remote servers on which multiple CPU intensive applications can be executed. The thin client devices also have some peripheral equipment to process the user input (a touch screen, an analog pointing device, or a basic keyboard and mouse). The images rendered on the screen are sent from the remote server(s) over the network connection. The images may consist of screen framebuffer data or bitmaps information compressed using different encoding schemes.

The screen updates strategies have been designed and developed mainly for LAN network and applications (like text editing application,) that are not as graphics intensive as multimedia applications. Multimedia applications such as a film played in a video player will typically require a higher framerate (the number of images rendered per second), minimum latency, transmission delays and jitter when the data is transmitted over the network.

The methods of prior art for refreshing the screen of a thin client device connected to a remote application server in a client/server architecture, are based either on a "Pull model" concept in which the client periodically sends requests for screen updates to the remote server and the server responds to each request, or on a "Push model" concept in which the server periodically and autonomously sends to the thin clients screen refresh messages consisting of graphics output data.

A drawback of the "Pull model" concept is that the transmission of animated images is limited by the round trip time of client requests and server responses which is not acceptable for multimedia rendering and high power consumption due to the frequent uplink transmission of screen refresh requests, while in the "Push model" concept a high scheduling transmission between the thin client and the remote server can lead to more frequent decoding requiring more processing at both the client and server side. In this case, a mobile client device with limited resources can become overloaded and the server cannot adjust the screen transmission (framerate, change of encoding scheme, ...) as it does not have accurate and instant knowledge of the wireless network conditions as the thin client device.

There is therefore a need for screen refresh adaptation to thin client device capabilities and wireless network conditions, more particularly in a mobile network environment where the bandwidth is limited. Besides the more data is sent on the uplink channels, the more bandwidth and power is consumed.

An object of the invention is a method for adapting the scheduling of graphics output data transmission to thin client capabilities and wireless network conditions wherein said thin client device is connected to a remote application server that overcomes the drawbacks of the method of prior art described above.

### PRESENTATION OF THE INVENTION

The object of the invention is achieved by means of a method for optimizing the refresh scheduling of graphics output data transmission adapted to thin client device needs and capabilities in a client/server architecture wherein said thin client device is connected to a remote server, and the scheduling of said graphics output data transmission is evaluated and requested by the thin client.

The method according to the invention comprises the following steps:
At the thin client side:
   - collecting information associated with at least one graphical area wherein said application graphics output data will be refreshed on a screen attached to said thin client device,
   - evaluating dynamically transmission and processing resources of said thin client device,
   - defining a dynamic criteria list for refresh scheduling in function of the collected information and in function of said thin client device (2) transmission and processing resources,
   - sending a screen refresh request comprising said dynamic criteria list to said remote server, and
At the remote server (4) side:
   - analyzing the received dynamic list,
   - defining a refresh scheduling in function of at least one criterion of said list and in function of the processing resource of the remote server.
Said collected information comprises at least one of the following parameters:
   - Quality of Service classes,
   - and/or parameters for acceptable quality of experience such as the required transmission bandwidth,
   - and/or the maximum transmission delay when the data is transmitted over a network.
And said processing resources comprise:
   - global processing capacity,
   - and/or battery level,
   - and/or radio resources of established communication channels
   - and/or radio link signal level,
   - and/or the peak signal to noise ratio for the objective assessment of the image quality,
   - and/or the CPU processing power,
   - and/or the available bandwidth on the radio link.

In a preferred embodiment of the invention, the method further comprises the evaluation of current framerate at the client side for adapting the dynamic list of criteria for refresh scheduling.

The method according to the invention further comprises the following steps:
- sending from the remote server to the thin client device the information associated with each application currently running on the server,
- adapting in the thin client device the refresh criteria list in function of said information and in function of the thin client device processing capabilities of the data generated by each of said applications.

Preferably, the criteria list comprises at least one of the following parameter:
- a specific expected transmission bit rate of graphics output data to be rendered on the screen attached to said thin client device,
- and/or a specific expected framerate, a time interval value between each screen update,
- and/or a specific frame rate, a display area size
- and/or position on the screen to be refreshed.

It will be appreciated that the criteria list (such as the time interval value) will be analyzed and re-evaluated by the server based on its local update policy and capabilities. The transmission rate of graphics output data will be applied by the server if said server detects some updates. So if nothing changes on the screen no updates should be sent.

The invention is implemented by means of a client device connected, in a client/server architecture, to a remote server comprising at least one application that generates data to be remotely displayed on a screen associated to said thin client device, said screen being refreshed regularly for displaying said data.

The thin client device according to the invention comprises:
- means for collecting information associated with at least one graphical area wherein application graphics output data will be refreshed on said screen,
- means for evaluating dynamically transmission and processing resources available,
- means for defining a dynamic criteria list for refresh scheduling in function of the collected information and in function of transmission and processing resources available,
- means for sending a screen refresh request comprising said dynamic criteria list to said remote server.

Preferably, said thin client device further comprises means for evaluating the current framerate to adapt said criteria list for refresh scheduling in function of said current framerate.

The remote server according to the invention comprises:
- means for collecting information associated with a graphical area on the screen to refresh,
- means for evaluating dynamically transmission and processing resources available,
- means for defining a refresh scheduling in function of the collected information and in function of transmission and processing resources available.

Said refresh scheduling being preferably applied only when updates of graphics output data need to be sent.

Preferably, the remote server further comprises means for sending to the thin client device (2) information associated with each application currently running on the server to enable said thin client to dynamically define a criteria list for refresh scheduling in function of said information associated with each application

### BRIEF DESCRIPTION OF THE FIGURES

The forgoing summary, as well as the following detailed description, will be better understood when read in conjunction with the appended figures illustrating an exemplary embodiment of the invention in which:
- figure 1, is a flowchart illustrating the steps of the method according to the invention,
- figure 2 is an example of implementation of the optimization method according to the invention applied to RFB (Remote Frame Buffer) Protocol.

### DESCRIPTION OF A DETAILED ENBODIMENT OF THE INVENTION

The invention will be described in virtual computing context in a client/server architecture comprising a thin client 2 that can be a mobile phone, a PDA, or a notebook connected to a remote network server 4.

The thin client 2 accesses to resources of a virtual machine hosted on the remote network server 4.

The virtual machine generates data or images upon request from the thin client 2. Said data or images are displayed on a screen of said thin client 2. The screen of the thin client 2 is refreshed regularly by means of screen update message transmitted by the remote network server 4 to the thin client 2 via internet or via a secured dedicated radio link.

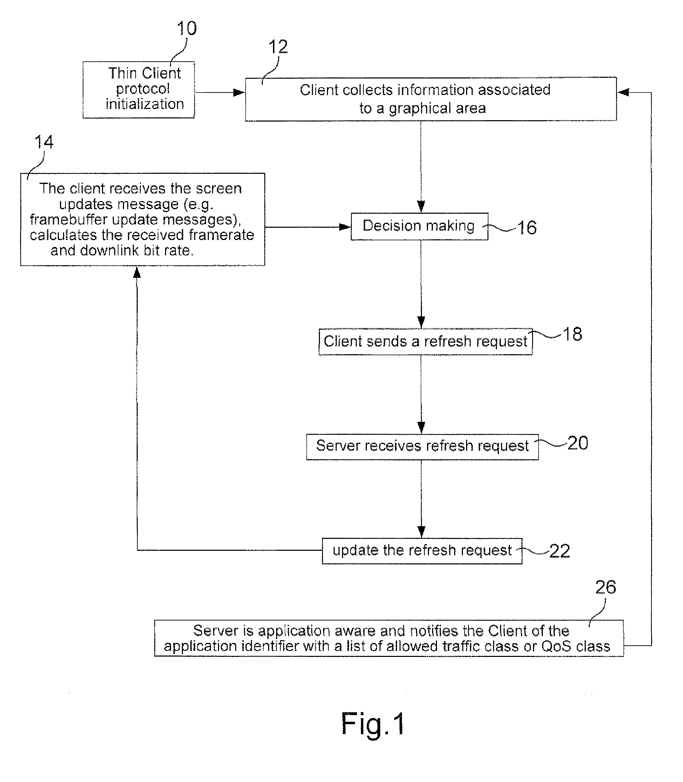

Referring now to figure 1, at step 10, the thin client 2 initializes the thin client session with the remote network server 4.

At step 12, the thin client 2 collects information associated with a graphical area in the screen to refresh such as display dimension. The information can further comprise QoS (Quality of service) class identifier for an application associated to the thin client session or for one or more applications started on the desktop session associated to the thin client session. The server may also notify the application whose window currently has the focus so that the client only requires screen refresh update for that particular application.

For instance when the thin client 2 changes of access network such as moving from a WiFi radio link to a UMTS radio link the transmission rate might need to be adjusted so the thin client 2 can send a new screen refresh request to the remote network server 4 with new refresh criteria. This can also happen when the radio link signal or Peak to Signal Noise Ratio is degrading. If the remote server 4 experiences local CPU overload then it may decrease the transmission rate as well.

The thin client 2 will be able to measure the reception rate (or the framerate) and decide to update the refresh criteria by requesting a lower screen refresh scheduling and/or a reduced display area and/or tuning the codec parameters.

In addition the thin client 2 can request different refresh criteria for different part of the screen to adapt to the type of application or to the associated traffic class.

At step 14, the remote network server 4 transmits to the thin client 2 a screen update message comprising graphics output data such as a framebuffer data; as previously explained, the thin client 2 can measure the reception rate (or the framerate) and decide to update the refresh criteria.

At step 16, the thin client 2 evaluates its transmission and processing resources and defines a dynamic list of criteria for refresh scheduling in function of the information collected at step 12, in function of its transmission and processing resources, and/or in function of the framebuffer comprised in the screen update message received from the remote network server 4 at a framerate evaluated at step 14. For instance the decision can be balanced by the level of remaining battery, the radio signal level on the communication user data channel, the estimated processing speeds on the thin client device or the calculated framerate based on the time interval of the received framebuffer on the communication user data channel.

At step 18, the thin client 2 sends to the remote server 4 a screen refresh request comprising the refresh criteria of the dynamic list defined at step 16, display area, the identifier of the application running on the remote network server 4 and which the user is interacting with, an indication of the type and the desired QoS class of the traffic between the thin client 2 and the remote network server 4.

At step 20, the remote network server 4 receives the refresh request and defines, at step 22, a refresh scheduling in function of at least one criterion of said list and in function of its available processing resource. The server analyzes whether there are new graphical updates generated by any running applications and if there are any updates, the server sends said graphics output data based on said refresh scheduling, at step 14, to the thin client 2.

Because it can be difficult for the thin client 2 to know which application corresponds to a graphical area for accurate decision making, an additional message named "application indication" containing the traffic class or the type of application for a given graphical area of the screen is sent from the network server 4 to the thin client 2. The graphical area may simply correspond to the Window having the focus on the remote network server 4. This involves the remote network server 4 to have knowledge of the running applications.

At step 26, the remote network server 4 informs the thin client 2 which application currently has the focus with a list of possible QoS (Quality of Service) classes. The thin client 2 can therefore evaluate the refresh criteria for the type of application which has the focus and may request one of the QoS class so that the server selects whatever encoding and graphics output format to adapt the content of graphics output data transmitted by the server.

The thin client 2, by analyzing its local capabilities (battery state, decoding capabilities, power processing speeds) and the traffic classes (proposed by the server) of a given graphical area will select and send the refresh criteria to the server.

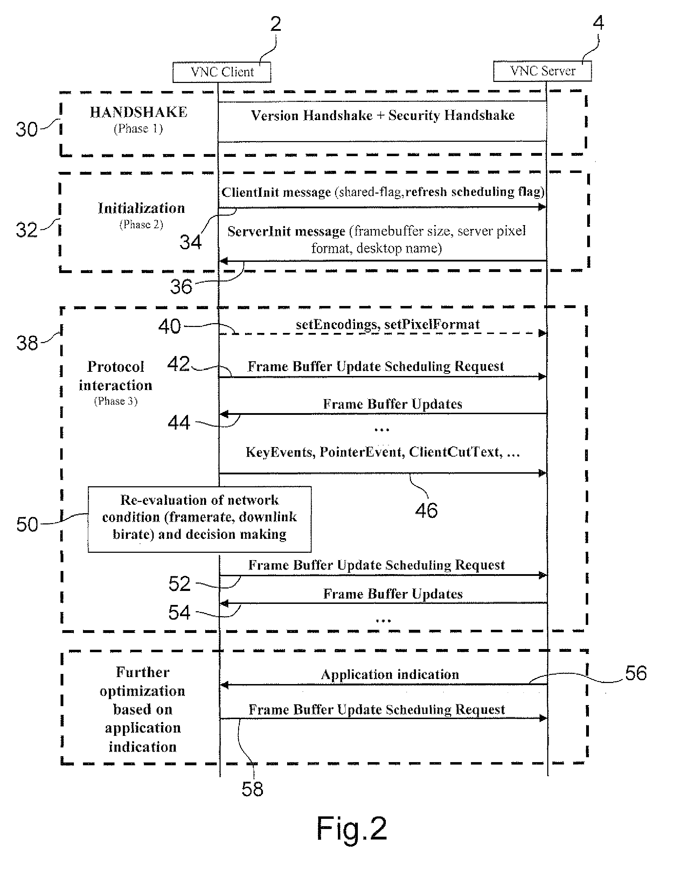

Referring now to figure 2, the figure illustrates an implementation of the method according to the invention to enhance the Remote Frame Buffer (RFB) protocol ("The RFB Protocol", Tristan Richardson, RealVNC Ltd, version 3.8) by way of example only. This improvement can be applied to other thin client protocols without departing from the scope of present invention.

The thin client 2 is a VNC (Virtual Network computing) device and the remote network server 4 is a VNC server.

The enhanced protocol comprises the usual handshake phase 30 during which the thin client 2 and the remote network server 4 share information relating to the protocol version and to the security procedure.

During an initialization phase 32 following the handshake phase 30, a message is sent to indicate that the protocol is enhanced to support the optimization as described in present invention. As such the thin client 2 transmits (step 34) to the remote network server 4 an Initialization message ClientInit comprising a refresh-scheduling-flag indicating to the remote network server 4 that the optimization shall be applied. In other words the server shall be prepared to receive Frame Buffer Update Scheduling Requests (step 42) in phase 38 and perform the appropriate transmission of graphics output data. If the flag is not indicated then the original framebuffer refresh method as specified in Remote Frame Buffer protocol specification shall be applied in phase 38. Although it is not illustrated in the figure 2, this refresh-scheduling flag indication may further be indicated during normal protocol interaction phase 38 to dynamically switch of screen refresh strategy (e.g. switch from legacy RFB protocol to enhanced protocol). It will be appreciated that the screen-refresh-flag may also be sent in the form of a message instead of a parameter.

At step 36, the remote network server 4 responds to the thin client 2 by a ServerInit message comprising frame buffer size, server pixel format and desktop name as described in Remote Frame Buffer protocol specification.

During the protocol interaction 38, at step 40, the thin client 2 sends to the remote network server 4 a message specifying the encoding format setEncodings and a message specifying the pixel format setPixelFormat, and a new Frame Buffer Update Scheduling Request including the expected framerate (or any time interval value) plus further information of display area at step 42. The remote network server 4 transmits Frame Buffer Updates to the thin client 2 at step 44 at a framerate equal to or lower than the desired framerate requested by the client, when there is a need to send graphics output data updates.

At step 46, the thin client 2 sends to the remote network server 4 messages to notify the User input events (KeyEvents, PointerEvent, ClientCutText...). These messages, as specified in RFB protocol, enable the user to interact with the remote desktop applications.

At step 50, the thin client 2 re-evaluates the network conditions such as framerate, downlink bitrate and sends a Frame Buffer Update Scheduling Request (step 52) to the remote network server 4.

The Frame Buffer Update Scheduling Request indicates to the remote network server 4 the expected scheduling of the screen updates, plus further indication of display area. At the beginning the default scheduling criteria is requested based on network conditions and processing resources. The refresh criteria are further evaluated based on the reception rate of received frame buffer update messages.

At step 54, the remote network server 4 sends Frame Buffer Updates to the thin client 2.

In a preferred embodiment, the remote network server 4 sends (step 56) information of application (dimensions, etc...) included in the message named "Application indication" so that the thin client 2 can accurately determine the refresh criteria and QoS class. By way of example a virtual screen clipping a part of a screen image can be created on the remote network server 4 and associated to an application and its identifier can be sent to the thin client 2 with a list of allowed QoS class.

At step 58, the thin client 2 sends to remote network server 4 a Frame Buffer Update Scheduling Request including new criteria list based on the received application indications.

Therefore accurate decision making can be done on a per application basis.

## Claims

1. A method for optimizing the refresh scheduling of graphics output data transmission adapted to thin client device (2) needs and capabilities in a client/server architecture wherein said thin client device is connected to a remote server (4), and the scheduling of said graphics output data transmission is evaluated and requested by the thin client, said method **characterized by** the following steps:
At the thin client side:
- collecting information associated with at least one graphical area wherein said application graphics output data will be refreshed on a screen attached to said thin client device,
- evaluating dynamically transmission and processing resources of said thin client device,
- defining a dynamic criteria list for refresh scheduling in function of the collected information and in function of said thin client device (2) transmission and processing resources,
- sending a screen refresh request comprising said dynamic criteria list to said remote server, and
At the remote server (4) side:
- analyzing the received dynamic list,
- defining a refresh scheduling in function of at least one criterion of said list and in function of the processing resource of the remote server.

2. A method according to claim 1 wherein said collected information comprise at least one of the following parameters:
- Quality of Service classes,
- and/or parameters for acceptable quality of experience such as the required transmission bandwidth,
- and/or the maximum transmission delay.

3. A method according to claim 1 wherein said processing resource comprise:
- global processing capacity,
- and/or battery level,
- and/or radio resources of established communication channels
- and/or radio link signal level,
- and/or the peak signal to noise ratio for the objective assessment of the image quality,
- and/or the CPU processing power,
- and/or the available bandwidth on the radio link.

4. A method according to claim 1 further comprising the following step evaluating the current framerate of received graphics output data for adapting the refresh criteria list in function of the current framerate.

5. A method according to claim 2 further comprising the following steps:
- sending from the remote server (4) to the thin client device (2) the information associated with each application currently running on the server,
- adapting in the thin client device (2) the refresh criteria list in function of said information and in function of the thin client device (2) processing capabilities of the data generated by each of said applications.

6. A method according to claim 1 wherein said criteria list comprises at least one of the following parameter:
- a specific expected transmission bit rate of graphics output data to be rendered on the screen attached to said thin client device (2),
- and/or a specific expected framerate, a time interval value between each screen update,
- and/or a specific frame rate, a display area size
- and/or position on the screen to be refreshed.

7. A thin client device (2) connected, in a client/server architecture, to a remote server (4) comprising at least one application that generates data to be remotely displayed on a screen associated to said thin client device, said screen being refreshed regularly for displaying said data, the thin client device (2) **characterized by**:
- means for collecting information associated with at least one graphical area wherein application graphics output data will be refreshed on said screen,
- means for evaluating dynamically transmission and processing resources available,
- means for defining a dynamic criteria list for refresh scheduling in function of the collected information and in function of transmission and processing resources available,
- means for sending a screen refresh request comprising said dynamic criteria list to said remote server (4).

8. A thin client device (2) according to claim 7 further comprising means for evaluating the current framerate to adapt said criteria list for refresh scheduling in function of said current framerate.

9. A remote server (4) connected, in a client/server architecture, to a thin client device, said remote server (4) comprising at least an application that generates data to be remotely displayed on a screen associated to said device, said screen being refreshed regularly for displaying said data, said remote server (4) **characterized by**:
- means for collecting information associated with a graphical area on the screen to refresh,
- means for evaluating dynamically transmission and processing resources available,
- means for defining a refresh scheduling in function of the collected information and in function of transmission and processing resources available.

10. A remote server (4) according to claim 9 further comprising means for sending to the thin client device (2) information associated with each application currently running on the server to enable said thin client to dynamically define a criteria list for refresh scheduling in function of said information associated with each application.
